# EUROPÄISCHE PATENTSCHRIFT

(11) **EP 0 512 370 B1**
(45) Veröffentlichungstag und Bekanntmachung des Hinweises auf die Patenterteilung: **30.10.1996**
(21) Anmeldenummer: 92107232.8
(22) Anmeldetag: 28.04.1992
(51) Int. Cl.: H04N 9/87, H04N 9/79

(54) **Kammfilterschaltung im wiedergabeseitigen Farbartkanal eines Videorecorders**
Combfilter circuit in the chrominance channel at the playback side of a videorecorder
Circuit de filtre en peigne dans le canal de chrominance du côté reproduction d'un enregistreur vidéo

(30) Priorität: 10.05.1991 DE 4115213
(43) Veröffentlichungstag der Anmeldung: 11.11.1992
(73) Patentinhaber: Nokia (Deutschland) GmbH, D-75175 Pforzheim (DE)
(72) Erfinder: Reime, Gerd, W-7542 Schömberg (DE)

(56) Entgegenhaltungen:
- EP-A- 0 293 188
- US-A- 4 796 096
- Derwent Publications Ltd., London, GB; AN 83-815849 & DE-A-3 316 080 (QUESTECH LTD) 10. November 1983
- GRUNDIG TECHNISCHE INFORMATIONEN Nr. 3, März 1984, FURTH DE Seiten 144 - 150 REIME 'Der Chromabaustein der neuen VHS-Recorder'

## Beschreibung

Die Erfindung betrifft eine im wiedergabeseitigen Farbartkanal eines Videorecorders angeordnete Kammfilterschaltung nach dem Oberbegriff des Anspruches 1.

In derartigen Videorecordern ist das Farbvideosignal üblicherweise in ein Helligkeitssignal (Y-Signal) und ein Farbartsignal aufgespalten. Das Helligkeitssignal wird vor der Aufzeichnung auf ein Videoband auf ein bestimmtes Frequenzband begrenzt, in eine Frequenzmodulation umgewandelt und auf einen Träger moduliert. Das Farbartsignal wird zur Aufzeichnung auf das Videoband in einen Frequenzbereich transponiert, der unterhalb des Bereiches des frequenzmodulierten Helligkeitssignales liegt. Jedes der zu übertragenden Videohalbbilder wird auf eine Schrägspur des Videobandes aufgezeichnet. Die Schrägspuren liegen ohne Zwischenraum dicht nebeneinander und die Zeilen der Videohalbbilder benachbarter Schrägspuren sind so auf der Schrägspur angeordnet, daß die Zeilen benachbarter Schrägspuren vollkommen zueinander parallel liegen. Um bei der Wiedergabe ein Übersprechen benachbarter Schrägspuren zu vermeiden, enthalten die beiden Magnetköpfe, die sowohl für die Aufzeichnung als auch für die Wiedergabe vorgesehen sind, eine unterschiedliche Schrägstellung ihres Kopfspaltes zur Schrägspur, die den Videokopf nur für die abzutastende Schrägspur wirksam macht und für die der abzutastenden Schrägspur benachbarten Schrägspuren verhältnismäßig unwirksam werden läßt. Diese Unwirksamkeit verliert sich jedoch im Bereich der Frequenzen, mit denen die Farbart auf das Videoband aufgezeichnet ist.

Um dieses bei der Abtastung der Farbartsignale vom Videoband entstandene Übersprechen zu kompensieren, ist es üblich, im wiedergabeseitigen Farbartkanal ein Kammfilter anzuordnen, daß im einfachsten Fall aus einer Zweizeilenverzögerungsleitung und einer Signaladditionsschaltung besteht. In diesem Kammfilter werden in Verbindung mit einer sich wiederholenden Folge der Phasenlage aufeinanderfolgender Zeilen der aufgezeichneten Videohalbbilder die Übersprechsignale der addierten Nutzsignale weitgehend ausgelöscht.

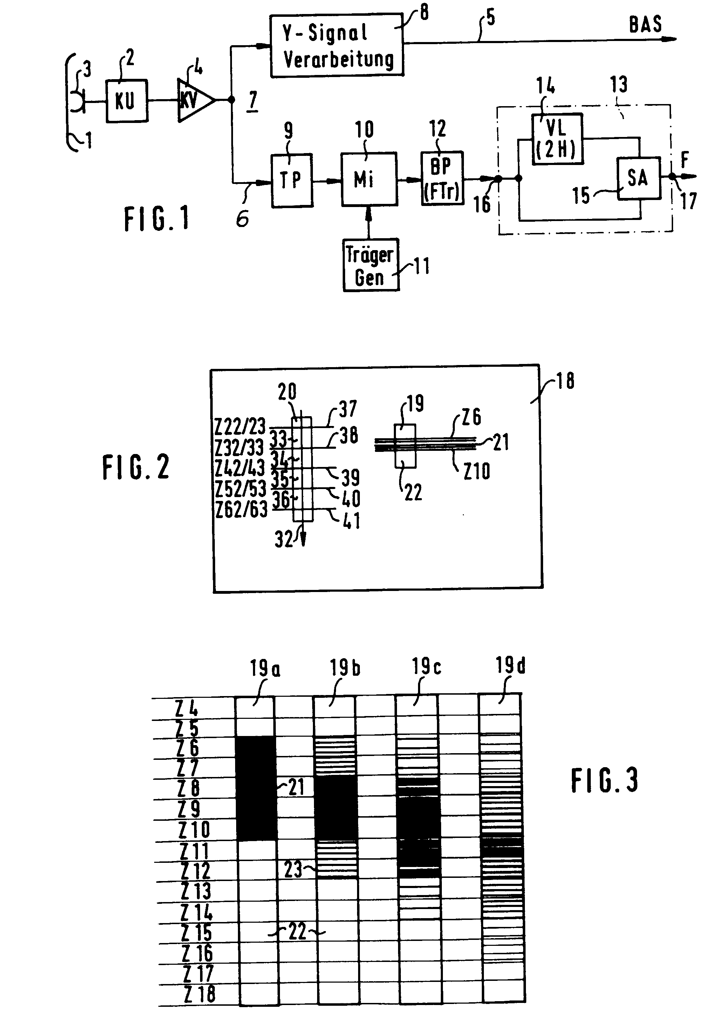

Zur Veranschaulichung ist in Figur 1 ein Blockschaltbild prinzipieller Teile einer wiedergabeseitigen Übertragungsschaltung für ein Farbvideobild handelsüblicher, bekannter Videorecorder dargestellt. Von einem Videoband 1 tastet ein von einem Kopfumschalter 2 zeilenweise ausgewählter Videokopf 3 die Aufzeichnung einer Schrägspur des Videobandes ab und überträgt sie über einen Kopfverstärker 4 auf einen Helligkeitssignalkanal 5 und einen Farbartkanal 6 der wiedergabeseitigen Übertragungsanordnung 7 eines Videorecorders. Die Schaltungsanordnungen zur Verarbeitung des Helligkeitssignales sind in der Darstellung durch einen Block 8 zusammengefaßt. Dieser Block liefert den BAS-Anteil des Farbbildsignales. Der Farbartkanal 6 enthält zur Abtrennung der Farbartsignale einen Tiefpaß 9, dem eine Mischerschaltung 10 mit angeschlossenem Trägergenerator 11 zur Rückmischung des Farbartsignales in die normgerechte Frequenzlage nachgeschaltet ist, und einen Bandpaß 12 zur Übertragung dieser normgerechten Farbartfrequenz an ein Kammfilter 13 des Farbartkanales 6. Das Kammfilter 13 enthält üblicherweise eine zwei Bildzeilen verzögernde Verzögerungsschaltung 14 und eine Additionsschaltung 15 zur phasenabhängigen Addition des verzögerten und des unverzögerten Farbartsignales. Das am Eingang 16 des Kammfilters 13 mit einer Übersprechstörung ankommende Farbartsignal F ist am Signalausgang 17 weitgehend von Übersprechstörung befreit.

Ein derartiges Kammfilter funktioniert jedoch nur dann einwandfrei, solange der Farbton der beiden an der Additionsschaltung addierten Farbartsignale etwa gleich ist. Beim vertikalen Übergang zweier Farbflächen komplementären Farbtones oder einer Farbfläche in einen weißen Bereich an einer waagerechten Übergangskante tritt in Folge der Zweizeilenverzögerung des Kammfilters an der waagerechten Übergangskante ein Streifen eine Farbstörung zwischen den beiden Farbflächen auf. Eine derartige Störung wird anhand der Figuren 2 und 3 veranschaulicht. Die Figur 2 stellt schematisch ein wiedergabeseitiges Farbvideobild 18 mit eingezeichneten Bildausschnitten 19 und 20 dar, die waagerechte Farbkanten erfassen. Die Bezugszeichen Z6 bis Z10, bzw. Z4 bis Z18 in Figur 3 sind willkürliche Bezeichnungen benachbarter Videozeilen eines Videohalbbildes. Der Ausschnitt 19 umfaßt die benachbarten Zeilen Z6 bis Z10 eines farbigen waagerechten Streifens 21 auf weißem Grund 22. Dieser farbige Streifen 21 ist im Bildausschnitt 19a schematisch dargestellt. Dieser Bildausschnitt 19a entspricht dem Bildausschnitt 19 der Figur 2. Die Zeilen Z4 und Z5 sowie Zll bis Z18 im Bildausschnitt 19a stellen den weißen Grund 22 dar, auf dem der farbige Streifen 21 angeordnet ist. In Folge der Wirkungsweise des Kammfilters 13 wird die Wiedergabe des aufgezeichneten farbigen Streifens so verzerrt, daß die Ausdehnung des farbigen Streifens 21 in vertikaler Richtung verringert wird und die waagerechten Ränder des farbigen Streifens von zweizeiligen Rändern einer zu gleichen Teilen aus dem Farbton des farbigen Streifens 21 und dem weißen Untergrund gemischten Farbton begrenzt wird, wie im Bildausschnitt 19b der Figur 3 schematisch dargestellt ist. Wird von der Aufzeichnung dieses Videobandes eine Kopie hergestellt, wird die Wiedergabe dieser Aufzeichnung durch das Kammfilter noch weiter verzerrt, wie in dem Bildausschnitt 19c schematisch dargestellt ist. Bei dieser Wiedergabe der zweiten Aufzeichung ist die Ausdehnung des farbigen Streifens in vertikaler Richtung noch weiter verringert worden. Außerdem schließen sich an den waagerechten farbigen Streifen 21 auf beiden Seiten zwei zweizeilige fehlfarbige Farbränder an, nämlich von innen nach außen mit abnehmender Farbintensität des Farbtons des farbigen Streifens 21. Die Wiedergabe einer Kopie dieser Aufzeichnung kommt im dargestellten Ausführungsbeispiel nicht einmal mehr auf die Intensität des Farbtones des farbigen Streifens 21 und verläuft mit abnehmender Intensität in nahezu sinusförmigem Verlauf in den weißen Grund 22, wie im Bildausschnitt 19d der Figur 3 schematisch dargestellt ist. Außerdem verschiebt sich bei jeder Aufzeichnung die mittlere Lage des farbigen Streifens 21 um eine Videozeile des Halbbildes nach unten, wie aus den Darstellung der Bildausschnitte 19a bis 19d der Figur 3 ohne weiteres zu erkennen ist. Das heißt, daß sich schon bei einer geringen Anzahl wiederholten Kopierens Farbflächen geringen Ausmaßes, die sich im Farbton stark absetzen, derart verschieben und verflachen, daß sie für den Betrachter eine unzumutbare Störung darstellen. Es ist deshalb schon kaum möglich, eine Aufzeichnung einer kopierten Aufzeichnung eines Videobandes herzustellen.

Um die an waagerechten Farbkanten durch das Kammfilter verursachte Farbstörungen auszuschalten, ist es aus der Patentschrift DD-C-206 521 bekannt, waagerechte Farbkanten eines SECAM-Farbsignals mit einem parallel zur Zweizeilen-Verzögerungsschaltung angeordneten Phasenvergleicher zu detektieren und im Detektionsfall den zweiten Additionseingang der Additionsschaltung vom Ausgang der Verzögerungsschaltung zu trennen. Dadurch ist die störende Wirkung des Kammfilters ausgeschaltet. Dieses Verfahren hat jedoch entsprechend der genannten Druckschrift den Nachteil, daß der Phasenvergleich nicht ausreichend ist, da auch bei völlig übereinstimmenden Signalen die Phasendifferenz der zu vergleichenden Signale bei einer festen vorgegebenen Verzögerungszeit frequenzabhängig ist. Nach den in der Druckschrift angegebenen Untersuchungen ist die Phasendifferenz zwischen Eingang und Ausgang der Verzögerungsleitung vom Verhältnis der Laufzeit der Verzögerungsleitung zur Schwingungszeit der Signalfrequenzen des Farbartsignales abhängig und kann nicht als Kriterium für die Abschaltung des verzögerten Kanals des Kammfilters verwendet werden, auch wenn sich die in zeitlicher Folge vorhandenen Eingangssignale nicht in der Frequenz unterscheiden. In der genannten Patentschrift wird deshalb vorgeschlagen, das Kammfilter mit einer Additionsschaltung und einer zusätzlichen Subtraktionsschaltung so auszugestalten und die Ausgangssignale der Additions- und der Subtraktionsschaltung auf eine weitere Additionsschaltung so zu übertragen, daß das Kammfilter bei gleichphasig addierten oder bei gegenphasig subtrahierten Farbartsignalen das Farbartsignal mit voller Kammfilterwirkung über die zweite Additionsschaltung überträgt und daß bei dieser Übertragung nur der dieser Übertragung zugeordnete Übertragungsweg zur zweiten Additionsschaltung durchgeschaltet ist. Diese Durchschaltung erfolgt entweder über einen Schwellwertschalter im Übertragungsweg oder über einen gesteuerten Schalter, der vom Signal mit der höheren Amplitude am Ausgang der Subtraktions- oder der Additionsschaltung gesteuert wird.

Die letztgenannte bekannte Kammfilterschaltung ist demnach so ausgestaltet, daß die Kammfilterwirkung über einen weiten Phasenbereich reicht, der wenigstens doppelt so groß ist, als der eines einfachen Kammfilters. Dadurch sind zwar die Übersprechstörung zwischen benachbarten Videozeilen eines Videohalbbildes auch bei größeren Phasenabweichungen beseitigt. Viel störender wirken sich jedoch die Farbstörungen an waagerechten Kanten eines Farbton- oder Farbintensitätüberganges in vertikaler Richtung in Folge der Wirkungsweise eines Kammfilters aus. Diese zeilenparallelen Farbstörungen, wie sie in Figur 3 schematisch dargestellt sind, werden bei der Verwendung des letztgenannten bekannten Kammfilters in keiner Weise vermindert. Vielmehr treten durch die Verwendung dieses Kammfilters vermehrt derartige zeilenparallele Farbstörungen an Farbübergängen auf, so daß der Betrachter eines derartigen Videofarbbildes in diesem Fall ein erheblich gestörtes Farbbild betrachten muß. Dies ist um so unbefriedigender, als derzeit die Wiedergabe auf ein Videoband aufgezeichneter Farbvideobilder mit einer gegenüber früher wesentlich besseren Wiedergabequalität des Helligkeitssignales möglich ist.

Aus der Druckschrift EP-A-0293 188 ist ein Chrominanzprozessor für den Wiedergabeteil eines Videorecorders bekannt. Dieser Prozessor weist zwischen seinem Eingang und seinem Ausgang ein Kammfilter und einen Umschalter zum Überbrücken des Kammfilters auf.

Ein Korrelationsdetektor, der aus dem Zeilenkorrelationsfehler von aufeinanderfolgenden Bildzeilen ein Schaltsignal generiert, überbrückt das Kammfilter, wenn ein hoher Zeilenkorrelationsfehler vorliegt, um ein Verwischen der Farbe, verursacht durch das Kammfilter, zu vermeiden.
Der Korrelationsdetektor enthält ein zweites Kammfilter mit einem 4H-Verzögerungsglied (gilt nur für ein PAL-Signal) und eine Subtraktionsschaltung. Am Ausgang des zweiten Kammfilters liegt ein Korrelationssignal in Form eines Subtraktionssignals, das aus dem Chrominanzsignal der jeweils aktuell übertragenen und der vier Zeilen zuvor übertragenen Videozeile gebildet wird. Dieses Subtraktionssignal wird sowohl über ein 2H-Verzögerungsglied verzögert, als auch auf direktem Wege jeweils einem Vollweggleichrichter zugeführt.

Die Ausgänge der Vollweggleichrichter sind jeweils mit einem Spannungskomparator verbunden, die die gleichgerichteten Subtraktionssignale mit einer Referenzspannung vergleichen. Jeder der Komparatoren gibt eine Schaltspannung ab, wenn das zugeführte gleichgerichtete Differenzsignal die Referenzspannung überschreitet. Eine Auswertelogik generiert immer dann ein Schaltsignal, wenn das gleichgerichtete unverzögerte Differenzsignal die Referenzspannung überschreitet und das durch das 2H-Verzögerungsglied verzögerte, gleichgerichtete Differenzsignal unterhalb der Referenzspannung liegt. Auf diese Weise wird immer dann, wenn zwischen zwei Zeilen ein starker Farbkontrast besteht, für die folgenden zwei Zeilen das Kammfilter überbrückt.

Die bekannte Schaltung weist einerseits den Nachteil auf, daß das Videobild hohe Farbintensitäten enthalten muß. Da sowohl das verzögerte als auch das unverzögerte Differenzsignal mit einem festen Referenzwert verglichen werden, können nur Korrelationsfehler festgestellt werden, wenn die Farbsättigung einen bestimmten Mindestwert überschreitet, anderenfalls wird keine Schaltspannung generiert, selbst wenn komplementäre Farbarten vorliegen. Ein weiterer Nachteil besteht darin, daß auch bei dieser Lösung das mit viel Aufwand generierte Korrelationsfehlersignal letztlich auf eine einfache Subtraktion eines verzögerten von einem unverzögerten Chrominanzsignal beruht. Der Nachteil eines solchen Korrelationsdetektors ist aus der Druckschrift DD-C-206 521 bekannt.

Der Erfindung liegt die Aufgabe zugrunde, ein Kammfilter der eingangs angegebenen Art derart auszubilden, daß es eine Farbbildwiedergabe ermöglicht, deren Farbdarstellung insbesondere an zeilenparallelen Kanten eines Farbton- oder Farbintensitätsprunges im wesentlichen für den Betrachter störungsfrei ist. Diese Aufgabe wird nach der Erfindung durch die im kennzeichnenden Teil des Anspruches 1 angegebenen Merkmale gelöst.

Der Erfindung liegt die Erkenntnis zugrunde, daß die Pegel der von einem Videoband abgetasteten Nutzsignale immer größer sind als die Pegel der gleichzeitig abgetasteten Übersprechsignale und daß bei der angegebenen Bemessung eines erfindungsgemäßen kammfilters auch bei kleinem Pegel des Farbartsignales nahezu ausschließlich im Bereich für den Betrachter auffallender zeilenparalleler Farbton- und Farbintensitätsübergänge das Subtraktionssignal aus dem verzögerten und dem unverzögerten Farbartsignal größer ist als der Pegel des gleichzeitig aus diesen Farbartsignalen gebildeten Additionssignales. Bei geringen Farbton- und/oder Farbintensitätsänderungen an zeilenparallelen Übergängen, die dem Betrachter nicht mehr auffallen, wirken sich durch das Kammfilter verursachte Farbfehler nicht mehr störend auf den Betrachter aus, so daß diese keine Störung des Gesamteindruckes des wiedergegebenen Farbvideobildes darstellen. Als besonders vorteilhaft hat sich eine Bemessung des Kammfilters herausgestellt, bei der die für den Vergleich maßgebliche Amplitude der Hüllkurve des Subtraktionssignales an einem zeilen parallelen Farbübergang von "weiß" (Farbintensität 0) zu einer bestimmten hohen Farbintensität eines Farbtones größer ist als die Amplitude der Hüllkurve des zu gleicher Zeit gebildeten Additionssignales.

Durch die Wirkung des erfindungsgemäßen Kammfilters wird das zur Wiedergabe eines Farbvideobildes übertragene Farbartsignal so zusammengesetzt, daß es weitgehend dem auf das Videoband aufgezeichneten entspricht. Die bei dieser Zusammensetzung an den auffallenden zeilenparallelen Farbübergängen auftretenden Übersprechstörungen werden vom Betrachter kaum als störend empfunden, da sie für den Betrachter vom Farbübergang empfindungsmäßig überdeckt werden.

Sehr vorteilhaft wirkt sich die Erfindung auch dadurch aus, daß auch beim Kopieren kopierter Videobänder nahezu kein Wandern zeilenparalleler, dem Betrachter auffallender Farbübergänge und auch kein wesentliches Verflachen dieser übergänge auftritt. Dadurch bleiben die durch das Helligkeitssignal wiedergegebenen Bildanteile im wesentliche deckungsgleich mit dem durch das Farbartsignal wiedergegebenen Bildanteile. Diese vorteilhafte Entstörungswirkung eines erfindungsgemäßen Kammfilters betrifft nicht nur Farbvideobilder mit hoher Amplitude des zur Bildwiedergabe übertragenen Farbartsignales, sondern auch die Wiedergabe von Farbvideobildern mit relativ blassen Farben, d. h. mit verhältnismäßig geringem Pegel des Farbartsignales.

Weitere vorteilhafte Ausgestaltungen der Erfindung sind in den Unteransprüchen angegeben und werden in der nachfolgenden Beschreibung näher erläutert.

Die Erfindung wird nachfolgend anhand vorteilhafter Ausführungsbeispiele näher erläutert. In den zugehörigen Zeichnungen zeigen
- Fig. 1: ein Blockschaltbild prinzipieller Teile einer wiedergabeseitigen Übertragungsanordnung für ein Farbvideobild eines handelsüblichen, bekannten Videorecorders;
- Fig. 2: ein schematisch dargestelltes, wiedergabeseitiges Farbvideobild mit eingezeichneten Bildausschnitten, die zeilenparallele Farbkanten erfassen;
- Fig. 3: eine zeilenweise Darstellung der Wiedergabe (a) des im Farbvideobild dargestellten ersten Bildausschnittes eines aufzuzeichnenden Farbvideosignals, die Wiedergabe (b) dieses auf ein Videoband aufgezeichneten Fernsehsignales, die Wiedergabe (c) einer Kopie dieser Wiedergabe und die Wiedergabe (d) einer Kopie der ersten Kopie;
- Fig. 4: ein Blockschaltbild eines Kammfilters mit einer Additionssignale und Differenzsignale vergleichenden Vergleicherschaltung nach der Erfindung
- Fig. 5: Diagramme a) bis g) der im Blockschaltbild der Figur 4 angegebenen Signale Sa bis Sg;
- Fig. 6: ein Farbkreis zu dem in den Figuren 4 und 5 angegebenen Signalen Sa bis Sg;
- Fig. 7: ein Blockschaltbild eines weiteren Ausführungsbeispieles eines erfindungsgemäßen Kammfilters mit einer das Additionssignal mit dem Subtraktionssignal vergleichenden Vergleicherschaltung und einer nachgeschalteten Additionsschaltung.

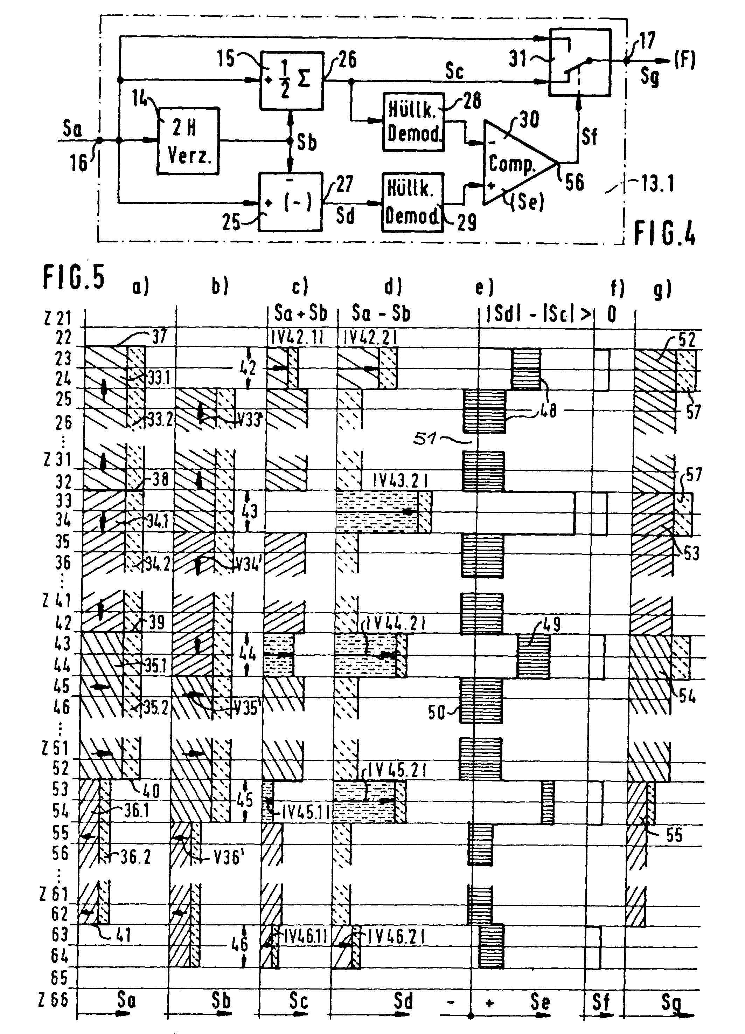

In Figur 4 ist das Blockschaltbild eines Kammfilters 13.1 dargestellt, das entsprechend dem in Figur 1 dargestellten Kammfilter 13 im wiedergabeseitigen Farbartkanal 6 eines Videorecorders angeordnet ist. Es enthält am Ausgang einer Zweizeilen-Verzögerungsschaltung 14 eine Additionsschaltung 15 und eine Subtraktionsschaltung 25. Der erste Signaleingang (+) dieser beiden Schaltung und der Signaleingang der Verzögerungsschaltung 14 sind mit dem Signaleingang 16 des Kammfilters 13.1 verbunden. An die Signalausgänge 26 und 27 der Additionsschaltung und der Subtraktionsschaltung ist je ein Hüllkurvendemodulator 28 bzw. 29 angeschlossen. Beide bilden je ein Hüllkurvensignal |Sd|, |Sc| der Ausgangssignale Sd bzw. Sc für die Vergleichereingänge (+) und (-) einer Vergleicherschaltung 30. Das Ausgangssignal Sf der Vergleicherschaltung 30 steuert einen elektronischen Schalter 31 derart, daß er entweder das unverzögerte Eingangssignal Sa des Kammfilters 13.1 an dessen Ausgang 17 oder das Ausgangssignal Sc der parallel zur Verzögerungsschaltung geschalteten Additionsschaltung 15 an den Signalausgang 17 des Kammfilters 13.1 überträgt.

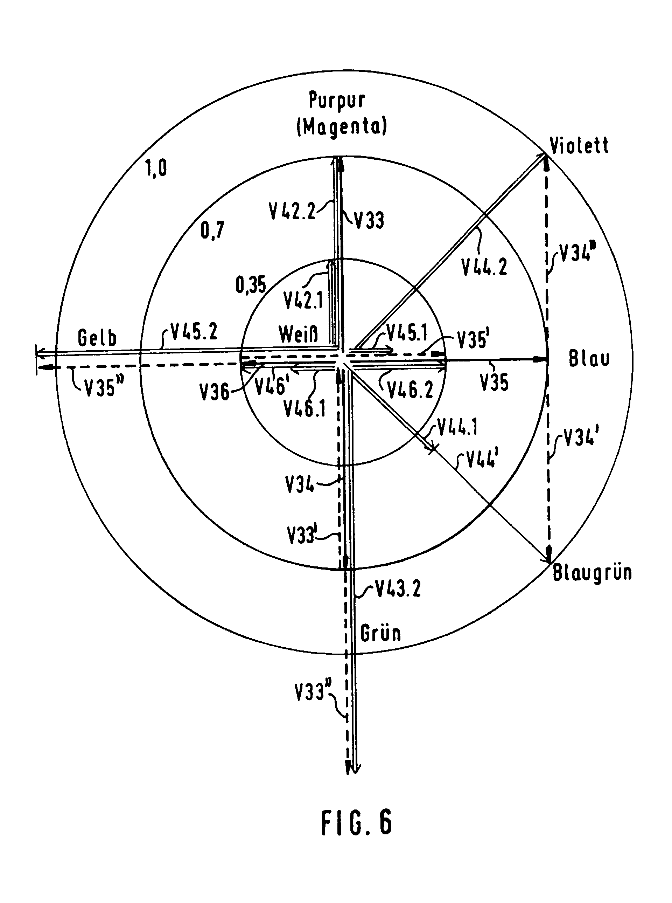

Die Wirkungsweise des in Figur 4 dargestellten Kammfilters 13.1 wird anhand der Diagramme a) bis g) der Figur 5 in Verbindung mit dem in Figur 6 dargestellten Farbkreis näher erläutert. Das Diagramm a) der Figur 5 enthält in einer schematischen Darstellung der Farbartsignale Sa entlang einer vertikalen Linie 32 eines in Figur 2 dargestellten Bildausschnittes 20 über die mit Z21 bis Z66 bezeichneten benachbarten Zeilen eines Videohalbbildes 18. Diese Zeilenbezeichnung Z21 bis Z66 braucht nicht mit den üblichen Zeilennummern einer Fernsehnorm übereinstimmen. Dieser Bildausschnitt enthält mehrere parallel zu den Videozeilen angeordnete Farbstreifen 33 bis 36 unterschiedlichen Farbtons und unterschiedlicher Farbsättigung mit zeilenparallelen Farbübergängen 37 bis 41 zwischen den Zeilen Z22 und Z23 den Zeilen Z32 und Z33, den Zeilen Z42 und Z43, den Zeilen Z52 und Z53 und zwischen den Zeilen Z62 und Z63. Diese zeilenparallelen Farbkanten 37 bis 41 sind ebenfalls in das Diagramm a) der Figur 5 für das eingangsseitige Farbartsignal des Kammfilters 13.1 eingezeichnet. Außerdem entspricht die Länge jedes Blockes 33.1 bis 36.1 dem Pegel des Farbartsignales der einzelnen Farbstreifen 33 bis 36 an der vertikalen Linie 32 des Bildausschnittes 20 des in Figur 2 dargestellten Videobildes 18. Auf diese Blöcke 33.1 bis 36.1 ist jeweils ein Block 33.2 bis 36.2 aufgesetzt. Diese Blöcke 33.2 bis 36.2 entsprechen dem Pegel des auf das Nutzsignal des Farbartsignales aufgesetzten Übersprechsignales. In Diagramm b) der Figur 5 ist entsprechend dem Diagramm a) der Figur 5 das mittels der Verzögerungsschaltung um zwei Videozeilen verzögerte Farbartsignal Sb dargestellt. Die Phasenlage der von dem Videoband 1 abgetasteten Videozeilen benachbarter Schrägspuren ist so gestaltet, daß die Phasenlage der Übersprechsignale in den am Eingang der Verzögerungsschaltung 14 liegenden Farbartsignalen Sa und den am Ausgang der Verzögerungsschaltung zu gleicher Zeit liegenden Farbartsignalen SAb gegenphasig sind, während die Nutzsignale gleichphasig sind. Infolgedessen werden bei der Addition der beiden Farbartsignale in der Additionsschaltung 15 die Nutzsignale addiert und die Übersprechsignale weitgehend ausgelöscht, wie im Diagramm c) der Figur 5 dargestellt ist, und bei der Subtraktion in der Subtraktionsschaltung im wesentlichen nur die Addition der Übersprechsignale 33.2 übertragen. Die Additionsschaltung 15 ist im dargestellten Ausführungsbeispiel so bemessen, daß ihr Ausgangssignal Sc jederzeit der arithmetische Mittelwert der Summe der Eingangssignale Sa und Sb ist. Die Farbart der Farbstreifen 33 bis 36 ist im dargestellten Ausführungsbeispiel so gewählt, daß der Farbton des zweiten Farbstreifens 34 eine Komplementärfarbe, z. B. grün, zum Farbton, z. b. purpur, des ersten Farbstreifens 33 ist und der Farbton des dritten Farbstreifens 35, z. B. blau, im Farbkreis (Figur 6) winkelmäßig etwa zwischen dem Farbton des ersten und des zweiten Farbstreifens 33, 34 liegt. Die Farbintensität dieser Farbtöne liegt im Farbkreis bei etwa 0,7. Der vierte Farbstreifen 36 enthält einen zum Farbton des dritten Farbstreifens 35 komplementären Farbton (gelb) mit der halben Intensität der Farbtöne der anderen Farbstreifen. Die Farbvektoren V33 bis V36 dieser Farbstreifen 33 bis 36 sind im Farbkreis der Figur 6 dicklinig eingetragen. In den zweizeiligen Farbüberlappungsbereichen, die im Diagramm b) der Figur 5 mit den Bezugszeichen 42 bis 46 gekennzeichnet sind und in denen die eingangsseitigen Farbartsignale Sa eines Farbstreifens von den verzögerten eingangsseitigen Farbartsignalen Sb des benachbarten Farbstreifens überlappt werden, entstehen in Folge dieser Überlappung die zweizeiligen Störstreifen einer störenden Fehlfarbe zwischen zwei benachbarten Farbstreifen. Die Entstehung dieser Farbstörstreifen in den Farbüberlappungsbereichen 42 bis 46 wird anhand des in Figur 6 dargestellten Farbkreises näher erläutert. Im ersten Farbüberlappungsbereich 42 am vertikalen Farbübergang vom weißen Grundbereich in den ersten Farbstreifen 33 (roter Farbstreifen) wird durch die Additionsschaltung 15 der Farbvektor V33 mit dessen halber Farbintensität übertragen (Farbvektor V42.1) und von der Subtraktionsschaltung 25 mit der vollen Farbintensität des Farbvektors 33 als Farbvektor V42.2, wie in den Diagrammen c) und d) der Figur 5 dargestellt ist. Im Farbüberlappungsbereich 43 wird die Farbintensität der Mischfarbe der beiden sich überlagernden Farbtöne zu Null, da die beiden Farbtöne Komplementärfarben gleicher Intensität sind und die Addition der zugehörigen Farbvektoren V33 und V34 Null ergibt. Die Subtraktion dieser Farbvektoren, die im Farbkreis durch die Aneinanderreihung der Vektoren V34 und V33'' dargestellt ist, ergibt einen Farbvektor V43.2 in Richtung des Farbvektors V34 mit dessen doppelter Vektorlänge. Im Farbüberlappungsbereich 44 stehen die Farbvektoren V34 und V35 der sich überlappenden Farbbänder 33 und 34 etwa rechtwinklig zueinander, so daß die Addition dieser beiden Farbvektoren einen Farbvektor V44' im Blaugrün-Gebiet und die Subtraktion dieser beiden Farbvektoren einen Farbvektor V44.2 im Violett-Gebiet ergibt. Das Additionssignal Sc wird jedoch nur mit der halben Intensität des Farbvektors V44' übertragen, so daß dessen Farbvektor im Farbkreis der Farbvektor V44.1 ist. Im Farbübertragungsbereich 45 überlappen sich wieder Farbarten mit komplementären Farbtönen, jedoch mit unterschiedlicher Intensität, so daß auch bei der Addition dieser beiden Farbartsignale ein Additionssignal entsteht, daß den Farbton des Farbartsignales mit dem Farbton der höheren Intensität erhält, jedoch in entsprechend geringerer Intensität. Die zugehörige Farbvektoraddition und -subtraktion ist im Farbkreis durch die Vektoraddition des Farbvektors V36 mit dem Vektor V35' dargestellt, die den Farbvektor V45.1 ergibt, und durch die Vektoraddition des Vektors V36 mit dem Vektor V35'', die den resultierenden Farbvektor V45.2 ergibt. Im Farbüberlappungsbereich 46 erzeugen die Additionsschaltung 15 und die Subtraktionsschaltung 25 die Farbvektoren V46.1 und V46.2. Die Breite des in den Farbüberlappungsbereichen 42 bis 46 eingezeichneten Pegelblockes der Signale Sc und Sd in den Diagrammen c) und d) der Figur 5 entspricht der Länge der zugehörigen resultierenden Farbvektoren V42.1 bis V46.2 des in Figur 6 dargestellten Farbkreises.

Im Diagramm e) der Figur 5 ist das resultierende Vergleicherdifferenzsignal Se dargestellt, das aus den an den Vergleichereingängen (+) und (-) der Vergleicherschaltung 30 anliegenden und von den Hüllkurvendemodulatoren 28 und 29 erzeugten Hüllkurvensignalen gebildet wird. Die rechts liegende Kontur 48 dieses Signales ist der Verlauf der Hüllkurve des in Diagramm d) dargestellten Subtraktionssignales Sd. Die waagerecht gestrichelten Teile des im Diagramm e) dargestellten Signales sind die entsprechenden Hüllkurventeile der Hüllkurve aus dem Additionssignal, das in Diagramm c) dargestellt ist, und die von der Kontur der Hüllkurve des Subtraktionssignales Sd abgezogen werden. Dadurch entsteht die linksseitige Kontur 50 des im Diagramm e) dargestellten resultierenden Vergleicherdifferenzsignales Se, die zu einem durch die Linie 51 dargestellten Vergleichspegel in Bezug steht. Liegt die linksseitige Kontur 50 des im Diagramm e) dargestellten resultierenden Vergleicherdifferenzsignals Se auf der positiven Seite, nämlich rechts der Linie 51 des Vergleichspegels, erzeugt die Vergleicherschaltung 30 an ihrem Signalausgang 52 ein Schaltsignal Sf, das im Diagramm f) der Figur 5 dargestellt ist und das den elektronischen Schalter 31 steuert. Überschreitet die linksseitige Kontur des in Diagramm e) dargestellten Vergleicherdifferenzsignales Se diesen Vergleichspegel 51 nach der positiven Seite hin nicht, erzeugt die Vergleicherschaltung kein Schaltsignal.

Im dargestellten Ausführungsbeispiel ist das Vergleichsdifferenzsignal Se der Vergleicherschaltung 30 die Differenz der Pegel der an den beiden Vergleichseingängen (+) und (-) anliegenden Hüllkurvensignalen. Ist der Pegel dieser beiden Signale gleich groß, ist der Wert des Vergleichsdifferenzsignales Se = 0. Die dargestellte Kammfilterschaltung 13.1 ist so bemessen, daß das aus dem Subtraktionssignal Sd gebildete Hüllkurvensignal in den Farbüberlappungsbereichen (42 oder 46) eines zeilenparallelen Farbüberganges von einem weißen Bildbereich in einen Bildbereich eines Farbtons einer bestimmten Farbintensität immer einen größeren Pegel aufweist als das in diesen Farbüberlappungsbereichen aus dem Additionssignal Sc gebildete Hüllkurvensignal.

Der elektronische Schalter 31 überträgt im ungeschalteten Zustand das in der Additionsschaltung 15 gebildete Additionssignal Sc an den Signalausgang 17 des Kammfilters und im geschalteten Zustand das am Signaleingang 16 des Kammfilters anliegende Farbartsignal Sa unmittelbar an dessen Signalausgang. Dadurch, daß mit der Vergleicherschaltung 30 die Überlappungsbereiche, in denen mit hoher Wahrscheinlichkeit eine für den Betrachter auffällige Farbstörung auftritt, mit hoher Sicherheit detektiert und mit einem Schaltsignal Se gekennzeichnet werden, kann in diesem Bereich das störbehaftete Signal durch ein farbmäßig ungestörtes Signal 52 bis 55 ersetzt werden, wie dies im Diagramm g) der Figur 5 schematisch dargestellt ist. Danach ist das ausgangsseitige Farbartsignal Sg, das im weiteren Übertragungsverlauf als Farbartsignal F mit dem Helligkeitssignal BAS zu dem Videosignal FBAS zusammengesetzt wird, aus dem vom Übersprechsignal befreiten Additionssignal Sc und in den farbgestörten Farbüberlappungsbereichen 42 bis 45 aus Signalteilen 52 bis 55 zusammengesetzt ist, die aus den eingangsseitigen Farbartsignalen 33 bis 36 entnommen wurden und daher keine Farbveränderungen durch das Kammfilter unterworfen waren. Dadurch wird durch das in Figur 4 dargestellte Kammfilter 13.1 an seinem Signalausgang 17 ein Farbartsignal erzeugt, das bezüglich der Farbtöne und der Farbintensitäten mit dem eingangsseitigen unverzögerten Farbartsignal identisch ist, im Bereich ausgedehnter Farbflächen jedoch keine Übersprechstörungen enthält. Die an den zeilenparallelen Farbübergängen enthaltenen Übersprechstörungen 57 im ausgangsseitigen Farbartsignal Sg fallen an diesen Farbübergängen nicht ins Auge, so daß sie an diesen Bildstellen des wiedergegebenen Farbvideobildes nicht störend wirken.

Damit die Signale, zwischen denen der elektronische Schalter 31 umschaltet, pegelmäßig einander entsprechen, ist die Additionsschaltung 15 so ausgebildet, daß sie aus den anliegenden Eingangssignalen den arithmetischen Mittelwert bildet. Dies hat außerdem den Vorteil, daß damit die Vergleichsbedingung für die Vergleicherschaltung 30 in günstigstem Maße eingestellt ist und identische Hüllkurvendemodulatoren 28 und 29 verwendet werden können. Bei dieser Bemessung ist die Signalumschaltung bis hinunter zu kleinsten Pegeln des eingangsseitigen Farbartsignales gewährleistet.

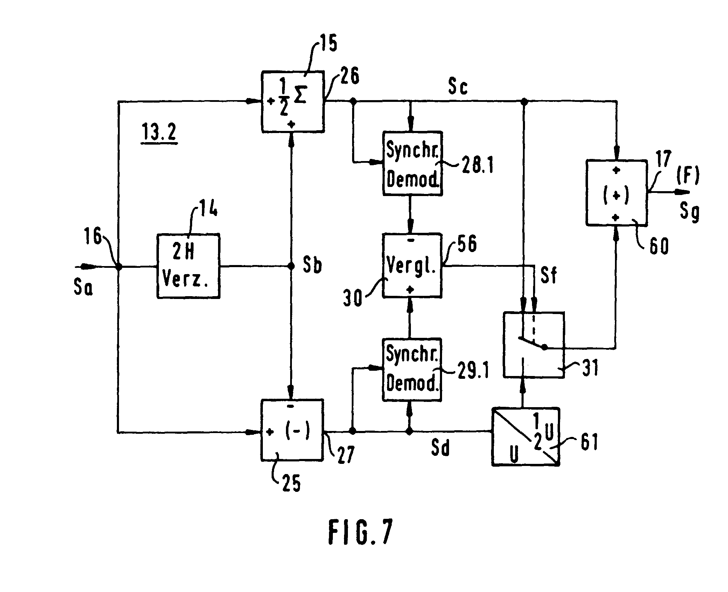

Das in Figur 7 dargestellte Kammfilter 13.2 unterscheidet sich von dem in Figur 4 dargestellten Kammfilter 13.1 im wesentlichen durch eine zweite Additionsschaltung 60, über die abhängig von der Schaltstellung eines elektronischen Schalters 31 entweder das Additionssignal Sc einer ersten Additionsschaltung 15 des Kammfilters oder das Additionssignal aus dem Additionssignal Sc der ersten Additionsschaltung und dem Subtraktionssignal Sd aus der Subtraktionsschaltung 25 an den Signalausgang 17 des Kammfilters 13.2 übertragen wird. Durch die Addition des Ausgangsignales Sc der Additionsschaltung 15 und des Ausgangssignales Sd der Subtraktionsschaltung 25 jeweils einander entsprechender Pegel erzeugt die zweite Additionschaltung 16 ein dem eingangsseitigen unverzögerten Farbartsignal identisches Ausgangssignal Sg. Zur Einstellung des richtigen Pegels des Subtraktionssignales enthält der Übertragungskanal des Subtraktionssignales Sd im dargestellten Ausführungsbeispiel eine Dämpfungsschaltung 61, die den Pegel des Subtraktionssignales Sd halbiert. Als Hüllkurvendemodulatoren 28 und 29 werden in dem in Figur 7 dargestellten Ausführungsbeispiel Synchrondemodulatoren 28.1 und 29.1 verwendet, die als schnelle Hüllkurvendemodulatoren besonders vorteilhaft sind.

Um Schaltknackstörungen zu vermeiden, ist es vorteilhaft, die elektronischen Schalter 31 so auszubilden, daß sie entlang einer weichen Übergangsschaltkurve in den anderen Schaltzustand überleiten.

## Patentansprüche

1. Kammfilterschaltung (13) im wiedergabeseitigen Farbartkanal (6) eines Videorecorders
- mit einer um zwei Videozeilen verzögernden Verzögerungseinrichtung (14) sowie einer Additionsschaltung (15) und einer Subtraktionsschaltung (25) zur Bildung eines Additionssignals (Sc) und eines Subtraktionssignals (Sd) aus einem unverzögerten und einem verzögerten eingangsseitigen Farbartsignal (Sa, Sb)
- mit einer Detektionsschaltung zum Erkennen von Farbton- und/oder Farbintensitätssprüngen, die geeignet sind, Farbstörungen an zeilenparallelen Farbübergängen (37 bis 41) eines zu einem Ausgang (17) des Farbartkanals (6) übertragenen und wiedergegebenen Videobildes (18) auszulösen,
- und mit einem Schalter (31) zum Abschalten der die Farbstörungen verursachenden Wirkung der Kammfilterschaltung (13),
**gekennzeichnet dadurch**, daß die Detektionsschaltung eine die Hüllkurven des Additionssignals (Sc) und des Subtraktionssignals (Sd) vergleichende Vergleicherschaltung (30) ist, die den Schalter (31) betätigt, wenn die Hüllkurve des Subtraktionssignals (Sd) größer ist als die Hüllkurve des Additionssignals (Sc), wobei dann anstelle des Additionssignals (Sc) das unverzögerte eingangsseitige Farbartsignal (Sa) zum Ausgang (17) des Farbartkanals (6) übertragen wird.

2. Kammfilterschaltung nach Anspruch 1, gekennzeichnet dadurch, daß die Pegel der Hüllkurven vom Additionssignal (Sc) und vom Subtraktionssignal (Sd) an den Vergleichereingängen (+, -) der Vergleicherschaltung (30) so eingestellt sind, daß bei einem zeilenparallelen Farbübergang (37) des eingangsseitigen Farbartsignals (Sa) von einer Farbintensität gleich Null, die der Farbintensität der Farbe Weiß entspricht, zu einem Farbton mit einer Farbintensität größer als Null die Amplitude der Hüllkurve des Subtraktionssignals (Sd) größer ist, als die Amplitude der Hüllkurve des Additionssignals.

3. Kammfilterschaltung nach Anspruch 2, gekennzeichnet dadurch, daß die Pegel der Hüllkurven an den Vergleichereingängen (+, -) so eingestellt sind, daß die Amplitude der Hüllkurve des Subtraktionssignals (Sd) doppelt so groß ist als die Amplitude der Hüllkurve des Additionssignals (Sc).

4. Kammfilterschaltung nach Anspruch 1, gekennzeichnet dadurch, daß die Additionsschaltung (15) eine Schaltung zur Bildung des arithmetischen Mittelwertes der Momentanwerte von dem unverzögerten und dem verzögerten eingangsseitigen Farbartsignal (Sa, Sb) ist.

5. Kammfilterschaltung nach Anspruch 1, dadurch gekennzeichnet, daß Synchrondemodulatoren (28.1, 29.1) die Hüllkurven für das Additionssignal (Sc) und das Subtraktionssignal (Sd) demodulieren.

## Claims

1. Comb filter circuit (13) in the playback-side chrominance channel (6) of a video recorder
- comprising a delay device (14) which delays by two video lines, as well as an addition circuit (15) and a subtraction circuit (25) for forming an addition signal (Sc) and a subtraction signal (Sd) from an undelayed and a delayed input-side chrominance signal (Sa, Sb),
- comprising a detection circuit for detecting sharp changes in hue and/or colour intensity which are capable of triggering colour defects at line-parallel colour transitions (37 to 41) in a video image (18) transmitted to and played back at an output (17) of the chrominance channel (6),
- and comprising a switch (31) for switching off that action of the comb filter circuit (13) which causes the colour defects,
characterized in that the detection circuit is a comparator circuit (30) which compares the envelope curves of the addition signal (Sc) and of the subtraction signal (Sd) and which actuates the switch (31) if the envelope curve of the subtraction signal (Sd) is larger than the envelope curve of the addition signal (Sc), in which case, instead of the addition signal (Sc), the undelayed input-side chrominance signal (Sa) is then transmitted to the output (17) of the chrominance channel (6).

2. Comb filter circuit according to Claim 1,
characterized in that the levels of the envelope curves of the addition signal (Sc) and of the subtraction signal (Sd) at the comparator inputs (+, -) of the comparator circuit (30) are adjusted so that, in the case of a line-parallel colour transition (37) of the input-side chrominance signal (Sa) from a colour intensity equal to 0, which corresponds to the colour intensity of the colour white, to a hue having a colour intensity greater than 0, the amplitude of the envelope curve of the subtraction signal (Sd) is greater than the amplitude of the envelope curve of the addition signal.

3. Comb filter circuit according to Claim 2,
characterized in that the level of the envelope curves at the comparator inputs (+, -) are adjusted so that the amplitude of the envelope curve of the subtraction signal (Sd) is twice as large as the amplitude of the envelope curve of the addition signal (Sc).

4. Comb filter circuit according to Claim 1,
characterized in that the addition circuit (15) is a circuit for forming the arithmetic mean value of the instantaneous values of the undelayed and the delayed input-side chrominance signal (Sa, Sb).

5. Comb filter circuit according to Claim 1,
characterized in that synchronous demodulators (28.1, 29.1) demodulate the envelope curves for the addition signal (Sc) and the subtraction signal (Sd).

## Revendications

1. Circuit de filtre en peigne (13) dans la voie de chrominance (6) du côté reproduction d'un enregistreur vidéo
- avec un dispositif de temporisation (14) à retard de deux lignes vidéo, ainsi qu'avec un circuit additionneur (15) et un circuit soustracteur (25) pour former un signal d'addition (Sc) et un signal de soustraction (Sd), à partir de signaux de chrominance, non retardé et retardé (Sa, Sb),du côté entrée,
- avec un circuit de détection, pour reconnaître les sauts de couleurs et/ou d'intensité des teintes, susceptibles de déclencher des perturbations des couleurs au niveau de transitions chromatiques (37 à 41), parallèles aux lignes, d'une image vidéo (18) transmise à une sortie (17) de la voie de chrominance (6) et reproduite,
- et avec un interrupteur (31) pour supprimer l'effet, provoquant les perturbations de couleurs, du circuit de filtre en peigne (13),
caractérisé en ce que le circuit de détection est un circuit comparateur (30), destiné à comparer les enveloppes du signal d'addition (Sc) et du signal de soustraction (Sd), ce circuit actionnant l'interrupteur (31) lorsque l'enveloppe du signal de soustraction (Sd) est plus grande que l'enveloppe du signal d'addition (Sc), auquel cas, à la place du signal d'addition (Sc), c'est le signal de chrominance du côté entrée non retardé (Sa) qui est transmis à la sortie (17) de la voie de chrominance (6).

2. Circuit de filtre en peigne selon la revendication 1, caractérisé en ce que les niveaux des enveloppes du signal d'addition (Sc) et du signal de soustraction (Sd) sont réglés, au niveau des entrées de comparaison (+, -) du circuit comparateur (30), de telle manière que, dans le cas d'une transition chromatique (37), parallèle aux lignes, du signal de chrominance du côté entrée (Sa), d'une intensité égale à zéro, qui correspond à l'intensité du blanc, à une teinte ayant une intensité supérieure à zéro, l'amplitude de l'enveloppe du signal de soustraction (Sd) soit plus grande que l'amplitude de l'enveloppe du signal d'addition.

3. Cicuit de filtre en peigne selon la revendication 2, caractérisé en ce que les niveaux des enveloppes sont réglés, au niveau des entrées de comparaison (+, -), de telle manière que l'amplitude de l'enveloppe du signal de soustraction (Sd) soit deux fois plus grande que l'amplitude de l'enveloppe du signal d'addition (Sc).

4. Circuit de filtre en peigne selon la revendication 1, caractérisé en ce que le circuit additionneur (15) est un circuit pour former la moyenne arithmétique des valeurs instantanées des signaux de chrominance, non retardé et retardé (Sa, Sb), du côté entrée.

5. Circuit de filtre en peigne selon la revendication 1, caractérisé en ce que des démodulateurs synchrones (28.1, 29.1) démodulent les enveloppes pour le signal d'addition (Sc) et le signal de soustraction (Sd).
